# EUROPEAN PATENT SPECIFICATION

(11) **EP 1 498 294 B1**
(45) Date of publication and mention of the grant of the patent: **22.11.2006**
(21) Application number: 04380147.1
(22) Date of filing: 15.07.2004
(51) Int. Cl.: B60J 5/04, B60J 1/17

(54) **Process for fixing the guides of a sliding vehicle window to the door frame**
Verfahren zur Befestigung der Führungsschienen eines Fahrzeugsfensters an den Türrahmen
Procédé pour la fixation des glissières d'une vitre de véhicule à la structure de porte

(30) Priority: 17.07.2003 ES 200301714 U
(43) Date of publication of application: 19.01.2005
(73) Proprietor: Seat, S.A., 08040 Barcelona (ES)
(72) Inventor: Munoz Martinez, Javier, 08760 Martorell (Barcelona) (ES); Juarros Alonso, Alberto, 08760 Martorell (Barcelona) (ES)
(74) Representative: Carvajal y Urquijo, Isabel

(56) References cited:
- FR-A- 2 776 965
- US-A1- 2002 066 232
- US-B1- 6 571 515

## Description

The present invention refers to a method according to the preamble of claim 1, of fixing the guides of window opener of automotive vehicle doors to the assembly formed by the framework and the panel of the door of the vehicle, an to a door according to the preamble of claim 5, to which said method has been applied. A method and a door of this type are known from US 6 571 515 B.

The doors of automotive vehicles are generally constituted of a metal framework and a reinforcement panel externally placed against the framework. Covering the area occupied by the panel, a plate defining the closed visible surface of the door is externally arranged on the fixed framework, and internally, a covering is arranged which can include an upholstery area, an armrest, lower glove compartments, etc. Internally, the door has assembled, among other mechanisms and elements, the guides of the window opener, which are arranged between the framework and the inner covering.

Usually, the guides of the window opener are fixed to the panel of the door and also to the plate thereof by means of two screws, an upper one and another lower one. Up to now, once the upper lock screw of the guide is screwed in, the operator responsible for this assembly must support said guide with one hand to align it with the openings of the plate and the panel of the door while at the same time, in a crouched position, the operator must introduce a long stud and apply the torque with the other hand to carry out the joining of the three mentioned elements. Additionally, the described operation must be performed on the production line, thus it is carried out in motion, therewith increasing its difficulty.

Said drawbacks translate, on one hand, into time the operator wastes in the attempts until he achieves threading or introducing the stud through the openings of the framework and panel, mainly due to the fact that this operation is not carried out in an ergonomic position, and on the other hand, into the fatigue implied by the effort of having to adopt a crouched position repeated times.

The object of the present invention is to eliminate the indicated drawbacks by means of an assembly method in which the previously described operations are not necessary.

To that end, according to the present invention, on one hand the guides are pre-assembled with the panel, and on the other hand, the stud defining the lower fixing of the guides is coupled to the framework of the door by simple vertical movement, without the necessity of carrying out an alignment and axial movement of said stud.

The assembly with the method of the invention translates into the following advantages:
- Less time used in the assembly operation, practically only that necessary for the screwing, since the need for threading the stud is eliminated;
- Less physical wear of the operator carrying out the operation, considering that since the guides are pre-assembled, the screws are already placed and partially screwed in; and
- Higher accuracy of the final position of the assembly, since it is already fixed by the pre-assembly of the guides in the panel.

The assembly formed by the panel and guides, which is assembled on the framework of the door in a fixed position with regard thereto, will simplify the work of the operator, which is practically reduced to applying the screwing torque for carrying out the fixing. In this manner, the time is reduced to that for screwing.

In summary, with the method of the invention the assembly goes from having three elements to be joined in a complicated and time-costly operation, to having a premounted assembly, formed by the guides and panel, which will only have to be fitted in the correct position in the plate frame of the door, and finally carrying out the fixing by said screws.

To simplify the assembly operation of the panel to the plate framework of the door, said framework has, for fixing each of the guides, an upper opening and a lower vertical groove situated on the lower side of said framework, after its upper edge.

As has been said, the guides are pre-assembled on the panel by means of upper and lower screws, of which screws at least the lower one is partially screwed to the panel and bears a divider situated between the guide and the panel maintaining a determined separation between both components, such that the lower screw can be introduced in the lower groove of the framework by sliding, to then carry out the complete tightening thereof.

The existence of the groove on the lower side of the framework of the door simplifies the mounting of the assembly of the panel and guides on said framework, since it is not necessary to search for an alignment position for the threading of the lower screw.

The features and advantages of the method of the invention will be more easily understood with the following description, made with reference to the attached drawings, in which a non-limiting embodiment example is shown.

In the drawings:
Figure 1 shows a front elevational view of a framework of a door, in which the outlines thereof are represented.
Figure 2 shows a frontal elevational view of a panel for the door of a vehicle, represented by its outlines, including the guides of the window opener.
Figure 3 corresponds to detail A of Figure 1, enlarged.
Figure 4 shows an exploded perspective view of the elements used in the assembly of the guides on the panel of the door.
Figure 5 shows a section of the panel of the door, taken according to the section line V-V of the Figure 2, enlarged, in a position prior to its coupling on the framework of the door.
Figure 6 shows a view similar to Figure 1, with the panel of the door assembled on the framework thereof.
Figure 7 shows a section of the framework with the assembled panel, taken according to the section line VII-VII of Figure 6, enlarged.

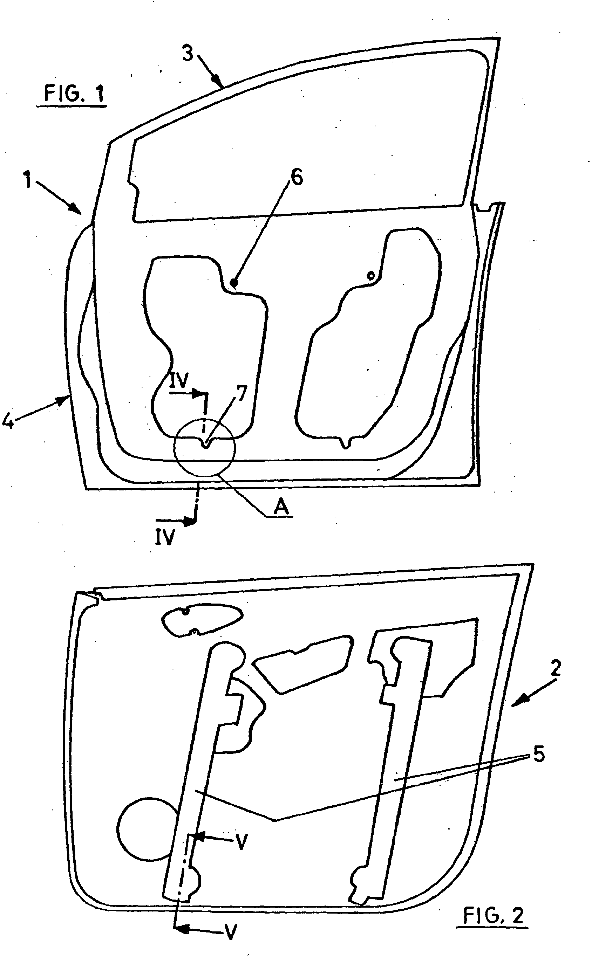

Figures 1 and 2 show the main components of the door of a vehicle, constituted of the plate framework 1 and the panel 2 represented in a simplified manner in Figures 1 and 2, respectively.

The plate framework 1 defines the outline 3 of the window and of the lower opaque area. The panel 2 will include different elements and components of the door, being the bearer of the guides 5 of the window opener. This panel 2 is assembled on the framework 1 by the outer surface thereof, then being covered by the plate defining the visible outer surface of the door. The covering which will form the interior upholstery of the vehicle is coupled and fixed on the inner surface of the framework 1.

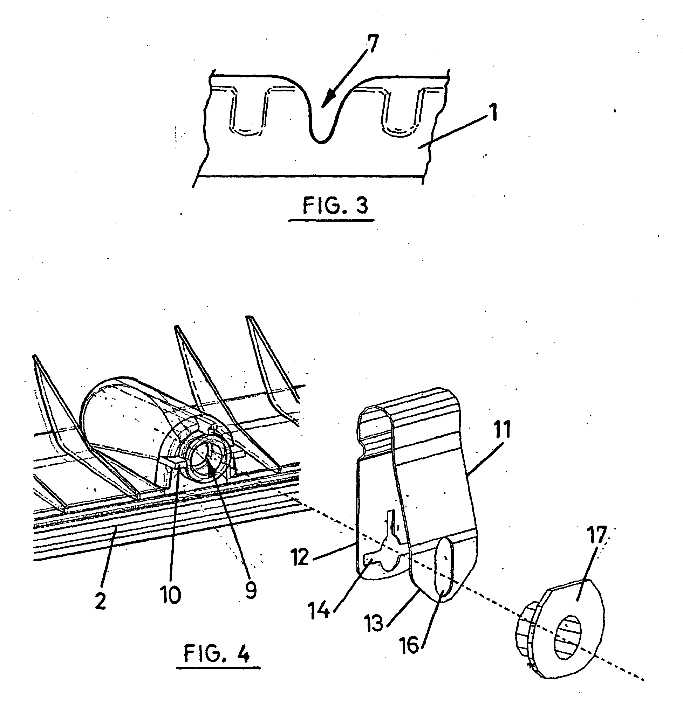

The guides 5 are fixed to the panel 2 and to the framework 1. To this end, according to the invention, the framework 1 has, for each guide, an upper opening 6 and a lower groove 7 which is made on the lower side of the framework, after the upper edge thereof, showing divergent curved edges, as better seen in Figure 3.

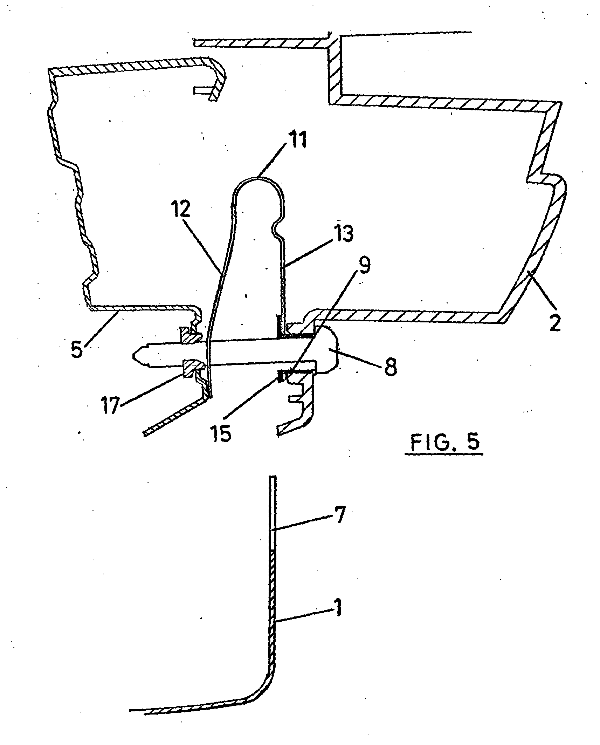

In a first step, according to the method of the invention, the pre-assembly of the guides 5 on the panel 2 is carried out by means of an upper screw not shown and a lower screw 8 shown in Figure 5.

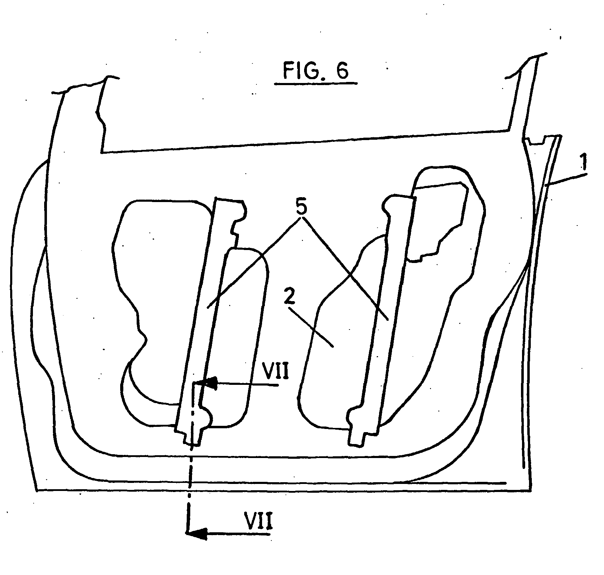

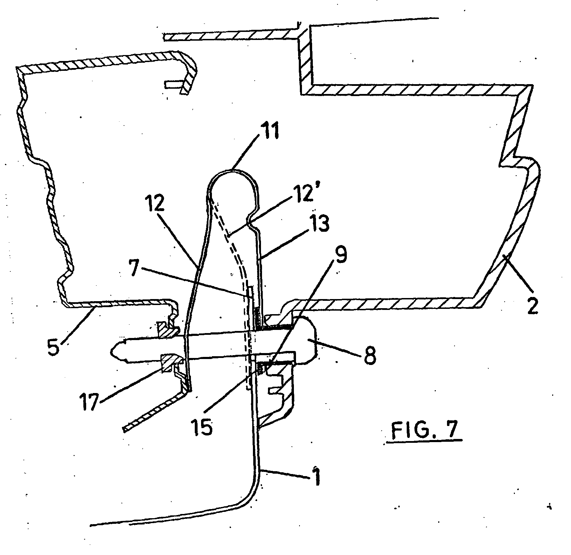

For the assembly of the lower screw 8, the panel 2 has a passage 9 on its lower portion, around which passage it has radial projections 10. A divider 11 is coupled on these passages, constituted of a bent U-shaped steel flat bar, of divergent branches 12 and 13. The branch 12 has a passage opening for the screw 8, with radial grooves 14 which can be coupled on the projections 10 of the panel 2, such that this divider 11 is prevented from rotating. The retention of the divider 11 on the passage 9 is carried out by means of a bushing 15, Figure 5. The branch 13 of the divider 11 has a passage opening 16 for the screw 8. The guide 5 is fixed on this screw and after the branch 13, which guide is retained by means of a second bushing 17, in which the screw 8 is screwed, the assembly thus being assembled, with the branches 12 and 13 of the divider spaced. With this arrangement, the two guides 5 are assembled in the panel 2, as shown in Figure 2. In this situation, the panel is ready to be assembled on the framework 1, to which end the panel 2 is placed against the framework 1 by the outer surface, situating the lower screw 8 of the two guides 5 on the lower groove 7, covering it, as shown in Figure 5. Then, the panel 2 is moved in a downwards direction, until the screw 8 enters in the grooves 7, as shown in Figures 6 and 7. Next, the tightening of the screw 8 is carried out, whereby the branch 12 of the divider 11 will occupy the position shown with the dashed line and referred to with number 12', in which it will be supported by or rest on the plate of the framework 1 and not on the panel 2 or the guide 5.

Figure 6 shows the assembly already mounted, with the panel 2 placed against the outer surface of the framework 1 and the guides 5 in their definitive position.

In summary, the assembly sequence with the method of the invention is summarized in the following steps:
- Pre-assembly of the guides 5 in the panel 2, in the manner described with reference to Figures 4 and 5.
- Upper fixing by means of the corresponding screw in the upper opening 6, which can be a circular opening and not a mounting hole since the possible tolerances will be absorbed with the fixing in the lower groove 7.
- Coupling the lower screw 2 on the lower groove 7 and tightening of said screw, in the manner described with reference to Figure 7. The definitive torque will be applied to the screw 8, deforming the divider 11 until the branch 12 thereof occupies the position 12'.

The divider 11 could adopt another different configuration or constitution, as long as it carries out the function of maintaining the guide 5 separated from the panel 2 in the pre-assembly position, until the moment of coupling the screw 8 on the groove 7 and carrying out the tightening thereof.

## Claims

1. A method of fixing the guides of the window opener of vehicle doors, which doors comprise a plate framework (1), a panel (2) which is externally assembled on the framework (1), and two guides (5) of the window opener which are each fixed to the panel (2) and to the framework (1) by means of an upper screw and another lower screw (8), the plate framework (1) having, for fixing each of said guides (5), at least an upper opening; the method **characterized by** the steps:
pre-assembling of the guides (5) on the panel (2) by means of upper and lower screws (8), of which screws the lower one (8) is partially screwed in and bears a divider (11) situated between the guide (5) and the panel (2) maintaining a determined separation between both components;
introducing by sliding of each of the lower screws (8) in a corresponding lower vertical groove (7) situated on the lower side of the framework;
carrying out the complete tightening of the lower screws (8).

2. A method according to claim 1, **characterized in that** said divider (11) is constituted of a bent U-shaped steel flat bar of divergent branches, which branches have respective passage openings for the lower screw (8), one of said branches being placed against the panel (2) and the other one against the guide (5) in the pre-assembly of said guide (5) on the panel (2), due to the action of the divider (11).

3. A method according to claim 2, **characterized in that** the panel (2) has radial projections (10) situated around the passage opening of the lower screw (8) on the side against which the corresponding branch of the divider (11) is placed, which projections (10) are introducible through facing grooves which said branch has, around the passage opening of the screw, to prevent the rotation of the divider (11).

4. A method according to the claims 2 and 3, **characterized in that** the divider (11) is fixed to the panel (2) by means of a bushing (15) traversing the opening of the branch of the divider (11) placed against the panel (2) and is tightly introduced in the opening of said panel (2), the lower lock screw of the guide (5) passing through this bushing and being screwed in a second bushing (17) partially introduced in the opening of the guide (5).

5. A vehicle door with guides of a window opener, which door comprises a plate framework (1), a panel (2) which is externally assembled on the framework (1), and two guides (5) of the window opener which are each fixed to the panel (2) and to the framework (1) by means of an upper screw and another lower screw (8), the plate framework (1) having, for fixing each of said guides (5), at least an upper opening (6), the vehicle door **characterized in that** each lower screw (8) bears a divider (11) situated under stress between the corresponding guide (5) and the panel (2), and that the plate framework (1) also has lower vertical grooves (7) situated on the lower side of said framework (1), after its upper edge; such that each lower screw (8) can be introduced by sliding in the corresponding lower groove (7) of the framework (1).

6. A vehicle door according to claim 5, **characterized in that** said divider (11) is constituted of a bent U-shaped steel flat bar of divergent branches, which branches have respective passage openings for the lower screw (8), one of said branches being placed against the panel (2) and the other one against the guide (5).

7. A vehicle door according to claim 6, **characterized in that** the panel (2) has radial projections (10) situated around the passage opening of the lower screw (8) on the side against which the corresponding branch of the divider (11) is placed, which projections (10) are introducible through facing grooves which said branch has, around the passage opening of the screw, to prevent the rotation of the divider (11).

8. A vehicle door according to claims 6 and 7, **characterized in that** the divider (11) is fixed to the panel (2) by means of a bushing (15) traversing the opening of the branch of the divider (11) placed against the panel (2) and is tightly introduced in the opening of said panel (2), the lower lock screw of the guide (5) passing through this bushing (15) and being screwed in a second bushing (17) partially introduced in the opening of the guide (5).

## Patentansprüche

1. Verfahren zum Befestigen der Führungen des Fensterhebers von Fahrzeugtüren, wobei die Türen ein Plattentragwerk (1), eine Platte (2), die außen an dem Tragwerk (1) angebracht ist, und zwei Führungen (5) für den Fensterheber aufweist, von denen jede an der Platte (2) und an dem Tragwerk (1) mit Hilfe einer oberen Schraube und einer anderen unteren Schraube (8) befestigt ist, wobei das Plattentragwerk (1) zum Befestigen jeder der Führungen (5) wenigstens eine obere Öffnung aufweist und sich das Verfahren durch die Schritte auszeichnet:
- Vormontieren der Führungen (5) an der Platte (2) mit Hilfe der oberen und unteren Schrauben (8), von denen die untere (8) teilweise eingeschraubt wird und einen Teiler (11) trägt, der zwischen der Führung (5) und der Platte (2) angeordnet ist und eine vorgegebene Trennung zwischen beiden Bauelementen aufrecht erhält,
- Einführen einer jeden der unteren Schrauben (8) in eine entsprechende untere vertikale Nut (7) durch Schieben, die sich an der unteren Seite des Tragwerks befindet, und
- Ausführen des vollständigen Festziehens der unteren Schrauben (8).

2. Verfahren nach Anspruch 1, **dadurch gekennzeichnet, dass** der Teiler (11) aus einer gebogenen U-förmigen Flachstahlstange mit auseinandergehenden Schenkeln besteht, die jeweils Durchgangsöffnungen für die untere Schraube (8) aufweisen, wobei einer der Schenkel an der Platte (2) und der andere an der Führung (5) in der Vormontage der Führung (5) an der Platte (2) aufgrund der Wirkung des Teilers (11) angeordnet wird.

3. Verfahren nach Anspruch 2, **dadurch gekennzeichnet, dass** die Platte (2) radiale Vorsprünge (10) hat, die um die Durchgangsöffnung der unteren Schraube (8) auf der Seite angeordnet sind, an der der entsprechende Schenkel des Teilers (11) angeordnet ist, wobei die Vorsprünge (10) durch zugewandte Nuten, die der Schenkel aufweist, um die Durchgangsöffnungen der Schraube herum einführbar sind, um ein Drehen des Teilers (11) zu verhindern.

4. Verfahren nach Anspruch 2 und 3, **dadurch gekennzeichnet, dass** der Teiler (11) an der Platte (2) mit Hilfe einer Büchse (15) befestigt wird, die durch die Öffnung des Schenkels des Teilers (11) hindurchgeht, der an der Platte (2) angeordnet ist, und fest in die Öffnung der Platte (2) eingeführt ist, wobei die untere Arretierschraube der Führung (5) durch diese Büchse hindurchgeht und in eine zweite Büchse (17) geschraubt wird, die teilweise in die Öffnung der Führung (5) eingeführt wird.

5. Fahrzeugtür mit Führungen für einen Fensterheber, wobei die Tür ein Plattentragwerk (1), eine Platte (2), die außen an dem Tragwerk (1) angebracht ist, und zwei Führungen (5) für den Fensterheber aufweist, von denen jede an der Platte (2) und an dem Tragwerk (1) mit Hilfe einer oberen Schraube und einer anderen unteren Schraube (8) befestigt ist, das Plattentragwerk (1) zum Befestigen jeder der Führungen (5) wenigstens eine obere Öffnung (6) aufweist und sich die Fahrzeugtür **dadurch** auszeichnet,
- dass jede untere Schraube (8) einen Teiler (11) trägt, der unter Spannung zwischen der entsprechenden Führung (5) und der Platte (2) angeordnet ist, und
- dass das Plattenwerk (1) auch untere vertikale Nuten (7) aufweist, die sich auf der unteren Seite des Tragwerks (1) nach seinem oberen Rand befinden, so dass jede untere Schraube (8) durch Schieben in die entsprechende untere Nut (7) des Tragwerks (1) eingeführt werden kann.

6. Fahrzeugtür nach Anspruch 5, **dadurch gekennzeichnet, dass** der Teiler (11) aus einer gebogenen U-förmigen Flachstahlstange mit auseinandergehenden Schenkeln besteht, die jeweils Durchgangsöffnungen für die untere Schraube (8) aufweisen, wobei einer der Schenkel an der Platte (2) und der andere an der Führung (5) angeordnet ist.

7. Fahrzeugtür nach Anspruch 6, **dadurch gekennzeichnet, dass** die Platte (2) radiale Vorsprünge (10) hat, die um die Durchgangsöffnung der unteren Schraube (8) auf der Seite angeordnet sind, an der der entsprechende Schenkel des Teilers (11) angeordnet ist, wobei die Vorsprünge (10) durch zugewandte Nuten, die der Schenkel aufweist, um die Durchgangsöffnungen der Schraube herum einführbar sind, um ein Drehen des Teilers (11) zu verhindern.

8. Fahrzeugtür nach Anspruch 6 und 7, **dadurch gekennzeichnet, dass** dass der Teiler (11) an der Platte (2) mit Hilfe einer Büchse (15) befestigt ist, die durch die Öffnung des Schenkels des Teilers (11) hindurchgeht, der an der Platte (2) angeordnet ist, und fest in die Öffnung der Platte (2) eingeführt ist, wobei die untere Arretierschraube der Führung (5) durch diese Büchse hindurchgeht und in eine zweite Büchse (17) geschraubt ist, die teilweise in die Öffnung der Führung (5) eingeführt ist.

## Revendications

1. Procédé de fixation des guides du dispositif d'ouverture de la vitre de portes de véhicules, lesquelles portes comprennent : un cadre plat (1), un panneau (2) qui est assemblé de façon externe au cadre (1) et deux guides (5) du dispositif d'ouverture de la vitre qui sont chacun fixés au panneau (2) et au cadre (1) au moyen d'une vis supérieure et d'une autre vis inférieure (8), le cadre plat (1) ayant, pour la fixation de chacun desdits guides (5), au moins une ouverture supérieure ; le procédé étant **caractérisé par** les étapes consistant à :
préassembler les guides (5) sur le panneau (2) au moyen de vis supérieure et inférieure (8), vis parmi lesquelles la vis inférieure (8) est partiellement vissée et supporte un intercalaire (11) situé entre le guide (5) et le panneau (2) qui maintient une séparation déterminée entre les deux composants ;
introduire par coulissement chacune des vis inférieures (8) dans une rainure verticale inférieure correspondante (7) située sur le côté inférieur du cadre ;
réaliser la fixation complète des vis inférieures (8).

2. Procédé selon la revendication 1, **caractérisé en ce que** ledit intercalaire (11) est constitué d'une barre plate en acier fléchie en forme de U à branches divergentes, lesquelles branches comportent des ouvertures de passage respectives pour la vis inférieure (8), l'une desdites branches étant placée contre le panneau (2) et l'autre contre le guide (5) lors du préassemblage dudit guide (5) sur le panneau (2), du fait de l'action de l'intercalaire (11).

3. Procédé selon la revendication 2, **caractérisé en ce que** le panneau (2) comporte des projections radiales (10) situées autour de l'ouverture de passage de la vis inférieure (8) sur le côté contre lequel la branche correspondante de l'intercalaire (11) est placée, lesquelles projections (10) peuvent être introduites dans des rainures se faisant face que comporte ladite branche, autour de l'ouverture de passage de la vis, afin d'empêcher la rotation de l'intercalaire (11).

4. Procédé selon les revendications 2 et 3, **caractérisé en ce que** l'intercalaire (11) est fixé au panneau (2) au moyen d'une douille (15) traversant l'ouverture de la branche de l'intercalaire (11) placée contre le panneau (2) et il est fermement introduit dans l'ouverture dudit panneau (2), la vis de verrouillage inférieure du guide (5) passant à travers cette douille et étant vissée dans une seconde douille (17) partiellement introduite dans l'ouverture du guide (5).

5. Porte de véhicule avec des guides de dispositif d'ouverture de la vitre, laquelle porte comprend un cadre plat (1), un panneau (2) qui est assemblé de façon externe sur le cadre (1) et deux guides (5) du dispositif d'ouverture de la vitre qui sont chacun fixés au panneau (2) et au cadre (1) au moyen d'une vis supérieure et d'une autre vis inférieure (8), le cadre plat (1) comportant, pour fixer chacun desdits guides (5), au moins une ouverture supérieure (6), la porte du véhicule étant **caractérisée en ce que** chaque vis inférieure (8) supporte un intercalaire (11) situé sous contrainte entre le guide correspondant (5) et le panneau (2) et **en ce que** le cadre plat (1) comporte également des rainures verticales inférieures (7) situées sur le côté inférieur dudit cadre (1), après son bord supérieur, de sorte que chaque vis inférieure (8) puisse être introduite par coulissement dans la rainure inférieure correspondante (7) du cadre (1).

6. Porte de véhicule selon la revendication 5, **caractérisée en ce que** ledit intercalaire (11) est constitué d'une barre plate en acier fléchie en forme de U à branches divergentes, lesquelles branches comportent des ouvertures de passage respectives pour la vis inférieure (8), l'une desdites branches étant placée contre le panneau (2) et l'autre contre le guide (5).

7. Porte de véhicule selon la revendication 6, **caractérisée en ce que** le panneau (2) comporte des projections radiales (10) situées autour de l'ouverture de passage de la vis inférieure (8) sur le côté contre lequel la branche correspondante de l'intercalaire (11) est placée, lesquelles projections (10) peuvent être introduites dans des rainures se faisant face que comporte ladite branche, autour de l'ouverture de passage de la vis, afin d'empêcher la rotation de l'intercalaire (11).

8. Porte de véhicule selon les revendications 6 et 7, **caractérisée en ce que** l'intercalaire (11) est fixé au panneau (2) au moyen d'une douille (15) traversant l'ouverture de la branche de l'intercalaire (11) placée contre le panneau (2) et il est fermement introduit dans l'ouverture dudit panneau (2), la vis de verrouillage inférieure du guide (5) passant à travers cette douille (15) et étant vissée dans une seconde douille (17) partiellement introduite dans l'ouverture du guide (5).
